# EUROPÄISCHE PATENTANMELDUNG

(11) **EP 2 669 341 A1**
(43) Veröffentlichungstag der Anmeldung: **04.12.2013**
(21) Anmeldenummer: 12004210.6
(22) Anmeldetag: 01.06.2012
(51) Int. Cl.: C09D 9/00, C11D 7/26, C11D 7/32, C11D 7/34, C11D 11/00

(54) **Reinigungsmittel**

(71) Anmelder: LCM GmbH, 32120 Hiddenhausen (DE)
(72) Erfinder: Ludewig, Daniel, 32257 Bünde (DE)
(74) Vertreter: Schober, Mirko

(57) **Zusammenfassung**

Ein Reinigungsmittel zum Entfernen von Lacken auf Oberflächen umfasst mindestens einen Dicarbonsäureester und mindestens ein Antikoagulationsmittel.

## Beschreibung

Die Erfindung betrifft ein Reinigungsmittel zum Entfernen von Lacken auf Oberflächen.

In der Möbelindustrie werden zur Beschichtung von Möbelstücken oder Glasplatten Lackieranlagen eingesetzt, in die die zu lackierenden Teile auf einem Transportband in eine Lackierkammer hinein und durch diese hindurch geführt werden.

Zum Lackieren werden Spritzautomaten mit Farbsprühdüsen und/oder Lackwalzen verwendet, um den Lack auf das Werkstück aufzutragen.

Da sich der Lack zwangsläufig beim Lackiervorgang nicht nur auf dem Werkstück niederschlägt, sondern auch auf den Sprühdüsen der Spritzautomaten und den Transportbändern, müssen die entsprechenden Teile der Lackieranlage gereinigt werden.

Hierzu werden in der Regel Reinigungsmittel auf der Basis von Aceton eingesetzt. Diese Reinigungsmittel enthalten jedoch flüchtige organische Substanzen (VOC), die in puncto Explosionsschutz und Umweltbelastungen problematisch sein können.

Aufgabe der vorliegenden Erfindung ist es daher, ein Reinigungsmittel für den genannten Zweck anzugeben, welches entsprechende problematische Eigenschaften nicht aufweist.

Gelöst wird diese Aufgabe durch ein Reinigungsmittel mit den Merkmalen des Anspruchs 1. Vorteilhafte Ausführungsformen finden sich in den abhängigen Ansprüchen.

Erfindungsgemäß weist das Reinigungsmittel mindestens einen Dicarbonsäureester und mindestens ein Antikoagulationsmittel auf. Bei normalen Betriebstemperaturen ist der Dicarbonsäureester nicht flüchtig und bildet ein für Lacke besonders vorteilhaftes Lösungsmittel. Damit der angelöste Lack nicht verklumpt, ist ein Antikoagulationsmittel im Reinigungsmittel enthalten, bei dem es sich bevorzugt um Harnstoff und/oder Natrium-Cumolsulfonat handelt.

Bevorzugt weist der Dicarbonsäureester mindestens ein Dimethylglutarat und/oder ein Dimethyladipat und/oder ein Dimethylsuccinat auf, wobei in dieser Modifikation vorgesehen sein kann, dass als Dicarbonsäureester mindestens ein Dimethylglutarat mit einem Anteil von 50 bis 60 Gewichtsprozent und/oder ein Dimethyladipat mit einem Anteil von 20 bis 30 Gewichtsprozent und/oder ein Dimethylsuccinat mit einem Anteil von 10 bis 25 Gewichtsprozent im Reinigungsmittel vorgesehen ist.

Als Antikoagulationsmittel kann Harnstoff mit einem Anteil von 1 bis 5 Gewichtsprozent und/oder Natrium-Cumolsulfonat mit einem Anteil von 1 bis 5 Gewichtsprozent im Reinigungsmittel vorgesehen sein.

Dieses Reinigungsmittel eignet sich insbesondere zur Verwendung bei der (manuellen) Lackentfernung von Lackwalzen und Spritzautomaten von Lackieranlagen.

In einer etwas anderen Zusammensetzung kann das Reinigungsmittel auch zur Verwendung bei der (automatischen) Lackentfernung von Transportbändern von Lackieranlagen vorgesehen sein.

Dieses Reinigungsmittel enthält, wie in Anspruch 6 ausgeführt, neben dem mindestens einen Dicarbonsäureester und dem Antikoagulationsmittel Wasser und einen Komplexbildner, insbesondere den Komplexbildner Natriumgluconat. Dadurch kann das Reinigungsmittel dünnflüssiger ausgebildet werden als bei ausschließlicher Verwendung der Dicarbonsäureester. Der Komplexbildner sorgt dafür, dass das Wasser nicht zu einer Übersäuerung des Reinigungsmittels führt und es infolge dessen nicht zur Ausfällung oder Ausflockung kommt.

Das Wasser ist dabei insbesondere demineralisiertes Wasser mit einem Anteil von 50 bis 55 Gewichtsprozent. Wenn als Komplexbildner Natriumgluconat eingesetzt wird, so enthält das Reinigungsmittel dies bevorzugt mit einem Anteil von 1 bis 5 Gewichtsprozent.

Als Dicarbonsäureester kommen bei dem Reinigungsmittel nach Anspruch 6 und den folgenden Ansprüchen wiederum die oben genannten Dicarbonsäureester in Frage. Bevorzugt weist das Reinigungsmittel mindestens ein Dimethylglutarat mit einem Anteil von 5 bis 10 Gewichtsprozent und/oder ein Dimethyladipat mit einem Anteil von 1 bis 5 Gewichtsprozent und/oder ein Dimethylsuccinat mit einem Anteil von 1 bis 2 Gewichtsprozent auf.

Bei der Ausführungsform nach Anspruch 6 und den folgenden Ansprüchen ist bevorzugt vorgesehen, dass das Reinigungsmittel als Antikoagulationsmittel Harnstoff mit einem Anteil von 1 bis 2 Gewichtsprozent und/oder Natrium-Cumolsulfonat mit einem Anteil von 25 bis 30 Gewichtsprozent aufweist.

Das Reinigungsmittel nach den Ansprüchen 6 bis 11 eignet sich zur maschinellen Verwendung. Dabei wird es insbesondere auf das Transportband, auf dem sich Lack befindet, aufgesprüht und der durch das nicht flüchtige Reinigungsmittel angelöste Lack wird mit einem Abtreifer bzw. Rakel vom Transportband abgestreift. Das Reinigungsmittel kann aufgrund seiner nichtflüchtigen Eigenschaft anschließend aufgefangen und mehrfach wieder verwendet werden. Ein Rezyklieren ist somit möglich.

## Patentansprüche

1. Reinigungsmittel zum Entfernen von Lacken auf Oberflächen, umfassend: mindestens einen Dicarbonsäureester und mindestens ein Antikoagulationsmittel.

2. Reinigungsmittel nach Anspruch 1,
**dadurch gekennzeichnet,**
**dass** es als Dicarbonsäureester mindestens ein Dimethylglutarat und/oder ein Dimethyladipat und/oder ein Dimethylsuccinat aufweist.

3. Reinigungsmittel nach Anspruch 1 oder 2,
**dadurch gekennzeichnet,**
**dass** es als Antikoagulationsmittel Harnstoff und/oder Natrium-Cumolsulfonat aufweist.

4. Reinigungsmittel nach einem der vorigen Ansprüche,
**dadurch gekennzeichnet,**
**dass** es als Dicarbonsäureester mindestens ein Dimethylglutarat mit einem Anteil von 50 bis 60 Gewichtsprozent und/oder ein Dimethyladipat mit einem Anteil von 20 bis 30 Gewichtsprozent und/oder ein Dimethylsuccinat mit einem Anteil von 10 bis 25 Gewichtsprozent aufweist.

5. Reinigungsmittel nach einem der vorigen Ansprüche,
**dadurch gekennzeichnet,**
**dass** es als Antikoagulationsmittel Harnstoff mit einem Anteil von 1 bis 5 Gewichtsprozent und/oder Natrium-Cumolsulfonat mit einem Anteil von 1 bis 5 Gewichtsprozent aufweist.

6. Reinigungsmittel nach einem der Ansprüche 1 bis 3, weiter aufweisend Wasser und einen Komplexbildner.

7. Reinigungsmittel nach Anspruch 6,
**dadurch gekennzeichnet,**
**dass** der Komplexbildner Natriumgluconat ist.

8. Reinigungsmittel nach Anspruch 6 oder 7,
**dadurch gekennzeichnet,**
**dass** es Wasser, insbesondere demineralisiertes Wasser, mit einem Anteil von 50 bis 55 Gewichtsprozent aufweist.

9. Reinigungsmittel nach einem der Ansprüche 6 bis 8, **dadurch gekennzeichnet,**
**dass** als Komplexbildner Natriumgluconat mit einem Anteil von 1 bis 5 Gewichtsprozent vorgesehen ist.

10. Reinigungsmittel nach einem der Ansprüche 6 bis 9, **dadurch gekennzeichnet,**
**dass** es als Dicarbonsäureester mindestens ein Dimethylglutarat mit einem Anteil von 5 bis 10 Gewichtsprozent und/oder ein Dimethyladipat mit einem Anteil von 1 bis 5 Gewichtsprozent und/oder ein Dimethylsuccinat mit einem Anteil von 1 bis 2 Gewichtsprozent aufweist.

11. Reinigungsmittel nach einem der vorigen Ansprüche,
**dadurch gekennzeichnet,**
**dass** es als Antikoagulationsmittel Harnstoff mit einem Anteil von 1 bis 2 Gewichtsprozent und/oder Natrium-Cumolsulfonat mit einem Anteil von 25 bis 30 Gewichtsprozent aufweist.

12. Verwendung eines Reinigungsmittels nach einem der Ansprüche 1 bis 5 zur Lackentfernung von Lackwalzen und Spritzautomaten von Lackieranlagen.

13. Verwendung eines Reinigungsmittels nach einem der Ansprüche 6 bis 11 zur Lackentfernung von Transportbändern von Lackieranlagen.
